# FASCICULE DE BREVET EUROPEEN

(11) **EP 2 466 602 B1**
(45) Date de publication et mention de la délivrance du brevet: **15.03.2017**
(21) Numéro de dépôt: 11354056.1
(22) Date de dépôt: 20.10.2011
(51) Int. Cl.: H01H 9/46, F16B 17/00, F16B 2/24

(54) **Procédé de fixation d'une corne d'arc sur un support de contact fixe dans un appareil de coupure électrique, et appareil électrique de coupure**
Verfahren zur Fixierung eines Bogenhorns auf einer festen Kontaktunterlage in einem elektrischen Schneidegerät, und entsprechendes elektrisches Schneidegerät
Method for attaching an arcing horn to a stationary contact mounting in an electrical switchgear, and electrical switchgear

(30) Priorité: 20.12.2010 FR 1004959
(43) Date de publication de la demande: 20.06.2012
(73) Titulaire: Schneider Electric Industries SAS, 92500 Rueil-Malmaison (FR)
(72) Inventeur: Gaudin, Emmanuel, 38050 Grenoble Cedex 09 (FR)
(74) Mandataire: Colette, Marie-Françoise

(56) Documents cités:
- EP-A1- 0 079 978
- DE-A1- 3 728 037
- DE-A1- 4 018 674
- FR-A1- 2 365 874
- Kohlmann: "Eckold Clinching - The joining technique of the future for sheet metal and profiles", Internet Article, 6 octobre 2008 (2008-10-06), XP002652538, Extrait de l'Internet: URL:http://www.eckold.com/Portals/0/Conten t/PDF/PDF%20Clinchen/Eckold%20Clinching%20 GB.pdf [extrait le 2011-07-21]
- Anonymous: "Clinchverfahren - TOX - Variopunkt II", Internet Article, 17 novembre 2008 (2008-11-17), XP002652539, Extrait de l'Internet: URL:http://web.archive.org/web/20080516050 444/http://www.tox-de.com/produkte/verbind ungstechnik/tox-clinch-verfahren/tox-vario punkt-ii.html [extrait le 2011-07-21]

## Description

La présente invention concerne un procédé de fixation d'une corne d'arc sur le support d'un contact fixe dans un appareil électrique de coupure, ledit support de contact fixe étant plié en forme de U, une pastille de contact étant fixée sur la surface extérieure de l'une des ailes du U précité.

La fixation d'une corne d'arc en acier sur le support de contact fixe dans un appareil de coupure électrique tel un interrupteur différentiel ou un disjoncteur par exemple, est nécessaire pour fiabiliser l'opération de montage dans les glissières du boîtier de l'appareil et pour empêcher que les supports de contact ne s'emmêlent pendant l'opération de tonnelage, la corne d'arc empêchant l'emmêlage desdits supports.
On connaît des réalisations dans lesquelles le support de contact est de forme plate et la fixation du support de contact sur la corne d'arc est réalisée par l'intermédiaire de vis, rivets, de clips, ou une soudure. Tous ces éléments constituent des pièces supplémentaires qui sont difficiles à mettre en oeuvre, compte tenu de la petite taille du porte-contact et de l'espace réduit dans lequel il est inséré dans l'interrupteur différentiel.
Selon une autre réalisation connue, le support de contact est en forme de U et, dans ce cas, la corne d'arc est intégrée au support de contact, ce qui pose certains problèmes d'encombrement parfois, qui ont conduit à la rendre de nouveau séparable du support de contact fixe. Or, selon cette réalisation en forme de U, il n'y a pas d'accès pour mettre un outil de sertissage entre les deux ailes du U du support de contact à cause de cette forme en U.

On connaît les documents DE 40 18674 et EP 0 079 978 décrivant un procédé de fixation d'une corne d'arc sur le support d'un contact fixe dans un appareil électrique de coupure, ledit support étant plié en forme de U, une pastille de contact étant fixée sur la surface extérieure de l'une des ailes du U précité, et dans lequel on réalise deux orifices dits premiers dans le support de contact fixe précité, puis on amène la corne d'arc au-dessus du support de contact de telle manière que la corne d'arc soit montée autour du plot.

La présente invention résout ces problèmes et propose un procédé de fixation d'une corne d'arc sur un support de contact fixe, de conception simple, et n'engendrant pas de volume supplémentaire, ainsi qu'un appareil de coupure comportant une corne d'arc et un support de contact fixés l'un à l'autre selon ce procédé.

A cet effet, la présente invention a pour objet un procédé de fixation d'une corne d'arc sur le support d'un contact fixe dans un appareil électrique de coupure, selon la revendication 1.

Selon une réalisation particulière, le nombre d'orifices dits premiers est de deux, de même que le nombre d'orifices dits seconds.

Selon une réalisation particulière, la corne d'arc est fixée sur la face extérieure de l'aile du U comportant la pastille de contact.

Selon l'invention, la corne d'arc précitée comporte une ouverture de forme semi-circulaire par laquelle ladite corne d'arc peut être montée autour de la pastille de contact précitée, ladite pastille de contact étant constituée par un plot en forme de disque en saillie sur ladite face extérieure de l'aile du U, ladite ouverture se prolongeant par une rainure, de part et d'autre de laquelle sont disposés les deux orifices dits seconds précités.

La présente invention a encore pour objet un appareil de coupure électrique comportant un contact fixe et un contact mobile, lesdits contacts étant aptes à être fermés lors d'un fonctionnement normal de l'appareil et à être ouverts lors de l'apparition d'un incident sur la ligne électrique sur laquelle est placé l'appareil, ledit contact fixe comportant une pastille de contact montée sur un support fixe, sur lequel support fixe est fixée une corne d'arc.

Selon une caractéristique particulière, cet appareil est un disjoncteur différentiel ou non ou un interrupteur différentiel ou non.

Mais d'autres avantages et caractéristiques de l'invention apparaîtront mieux dans la description détaillée qui suit et se réfère aux dessins annexés donnés uniquement à titre d'exemple et dans lesquels :
- La figure 1 est une vue en perspective illustrant la partie intérieure d'un interrupteur différentiel selon l'invention, la face avant de l'appareil ayant été retirée,
- La figure 2 est une vue en perspective illustrant une corne d'arc et un support de contact fixe, préalablement à leur fixation par le procédé de fixation selon l'invention,
- La figure 3 est une vue avant du support de contact, après fixation de la corne d'arc sur ledit support,
- La figure 4 est une vue en coupe selon A-A de la figure précédente,
- La figure 5 est une vue en coupe transversale d'un support appartenant à un appareil de coupure selon l'invention, ledit support comportant des glissières aptes à recevoir les supports de contact fixe sur lesquels seront fixées les cornes d'arc selon le procédé de l'invention,

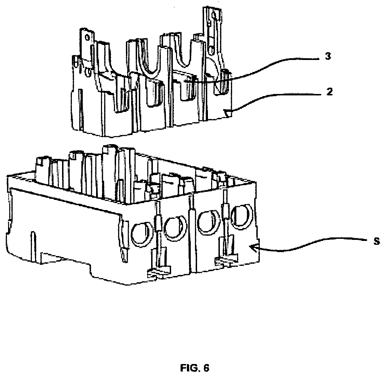

- La figure 6 est une vue en perspective, illustrant le support à glissières précité et le socle de l'appareil dans lequel ce support est destiné à être fixé, et

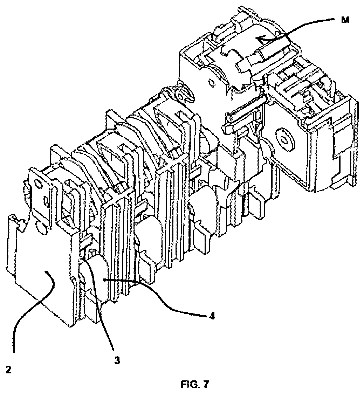

- La figure 7 est une vue en perspective du dit support à glissières, préalablement à sa mise en place dans le socle précité,

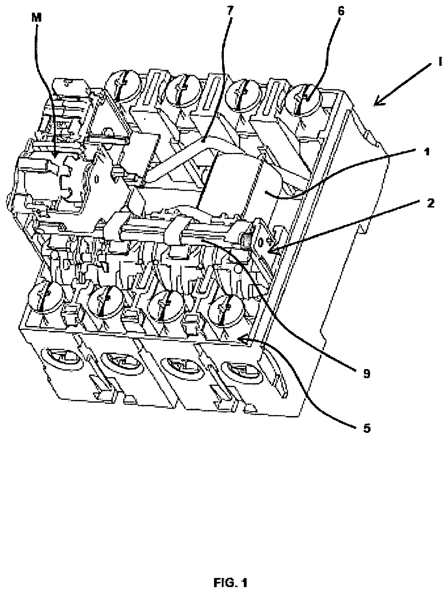

Sur la figure 1, on voit un interrupteur différentiel I comportant principalement et de manière connue en soi, un mécanisme M d'ouverture et de fermeture de contacts, un tore 1 appartenant à la partie de l'appareil destinée à assurer la protection différentielle, un support 2 à glissières 3 destiné à recevoir les supports 4 de contact fixe et les supports de contact mobile, ledit support à glissières étant destiné à supporter également l'arbre de commande 9 des contacts et le mécanisme M de l'appareil. Une fois ces éléments montés sur le support 2 à glissières, les bornes d'entrée 5 de l'interrupteur I sont reliées électriquement aux contacts mobiles et les bornes de sortie 6 de l'interrupteur sont reliées aux extrémités libres des conducteurs primaires 7 (fig.1) sortant du tore 1, après quoi tout cet ensemble est monté à l'intérieur du socle S de l'appareil.

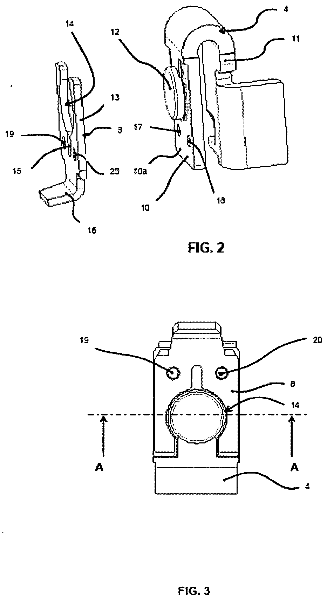

Afin d'éviter un mauvais positionnement du support 4 de contact fixe et de la corne d'arc 8 qui lui est associée dans les glissières 3 du support 2 à glissières, la corne d'arc 8 est fixée au support 4 du contact fixe par un procédé de fixation selon l'invention. Tel qu'illustré sur les figures 2,3 et 4, le support 4 de contact fixe comporte une pièce en U dont l'une 10 des ailes 10,11 comporte sur sa face extérieure 10a un plot 12 en saillie et constituant une pastille de contact. La corne d'arc 8 est constituée principalement par une pièce en L, comportant une première partie 13 présentant une ouverture semi-circulaire 14 débouchant à l'extrémité libre de cette partie 13 et comportant à une extrémité opposée, une rainure 15, et une seconde partie 16 s'étendant sensiblement perpendiculairement à la première partie. La corne d'arc 8 est destinée à être fixée sur le support 4 de contact fixe par cette première partie 13 après le montage de l'ouverture semi-circulaire 14 de cette première partie autour du plot précité 12. A cet effet, selon l'invention, deux orifices 17,18 dits premiers sont réalisés par perçage dans l'aile 10 du U du support 4 de contact fixe ainsi que deux orifices 19,20 dits seconds dans la première partie 13 de la corne d'arc 8. Sur la corne d'arc, ces orifices 19,20 sont placés de part et d'autre de la rainure précitée 15, ces deux orifices 19,20 étant destinés à être placés en regard des orifices 17,18 dits premiers situés sur l'aile 10 du support 4 de contact fixe. Les seconds orifices 19,20 présentent des dimensions plus petites que les premiers orifices 17,18.

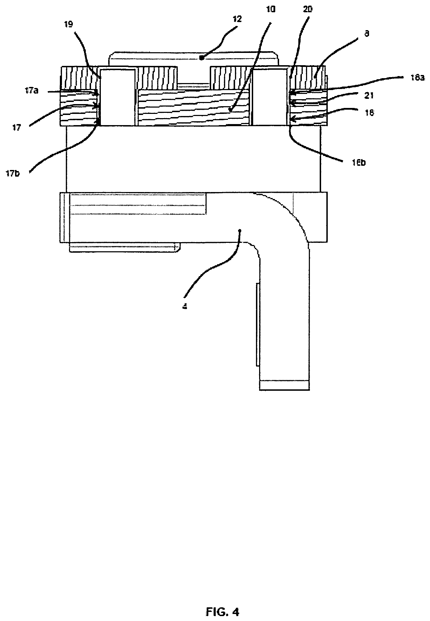

Puis, on utilise deux poinçons afin de pousser la matière de la corne d'arc 8 dans les orifices 17,18 du support 4 de contact fixe, par leurs premières extrémités 17a,18a, ladite matière 21 étant plaquée contre la surface intérieure desdits premiers orifices 17,18 sans que la matière ne débouche à l'opposé desdits premiers orifices, par leurs extrémités opposées 17b,18b, tel que ceci est illustré sur la figure 4.

On réalise ainsi la fixation de la corne d'arc sur le support de contact fixe par accrochage, et/ou frottement et/ou arc-boutement de la matière de la corne d'arc sur la surface intérieure des orifices dits premiers orifices du support de contact fixe.

Contrairement aux procédés habituels, la matière ne débouche pas et elle n'est pas repoussée sur les bords des orifices situés du côté opposé à la corne d'arc, afin d'assurer le maintien de la corne d'arc sur le support de contact fixe.

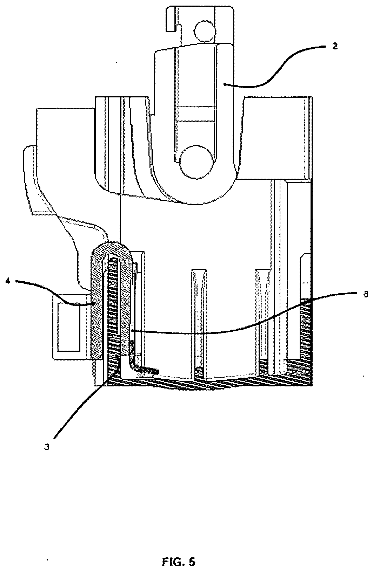

Cette fixation est incomplète mais suffisante pour tenir les pièces ensemble pendant l'opération de tonnelage et pendant l'opération de montage de la corne d'arc et du support de contact fixe dans les glissières prévues dans l'interrupteur, tel qu'illustré sur la figure 5.

On a donc réalisé grâce à l'invention la fixation de la corne d'arc sur le support de contact fixe sans volume supplémentaire.

C'est ainsi qu'une autre réalisation, qui ne fait pas partie de l'invention, aurait pu consister à réaliser deux orifices dans le support et à ne pas réaliser de perçage dans la corne d'arc, mais à amener la matière de la corne d'arc dans les orifices du support par poinçonnage.

Bien entendu, l'invention n'est pas limitée aux modes de réalisation décrits et illustrés qui n'ont été donnés qu'à titre d'exemple.

## Revendications

1. Procédé de fixation d'une corne d'arc (8) sur le support (4) d'un contact fixe dans un appareil électrique de coupure, ledit support (4) étant plié en forme de U, une pastille de contact (12) étant fixée sur la surface extérieure (10a) de l'une des ailes du U précité,
**caractérisé en ce que** la corne d'arc précitée (8) comporte une ouverture (14) de forme semi-circulaire par laquelle ladite corne d'arc (8) peut être montée autour de la pastille de contact précitée (12), ladite pastille de contact (12) étant constituée par un plot en forme de disque en saillie sur ladite surface extérieure (10a) de l'aile (10) du U, et **en ce que** l'on réalise deux orifices dits premiers (17,18) dans le support (4) de contact fixe précité, puis l'on réalise un pré-perçage dans la corne d'arc (8) de manière à réaliser au moins un orifice(s) dit second(s) (19,20) dans la corne d'arc, ledit(lesdits) second(s) orifice(s) (19,20) étant de dimensions plus réduites que ledit(lesdits) premier(s) orifices(s) (17,18), puis on amène la corne d'arc (8) au-dessus du support de contact de telle manière que la corne d'arc soit montée autour du plot, en disposant l'(les) orifice(s) dit(s) premier(s) en regard de l' (des) orifice(s) dit(s) second(s), puis la matière (21) de la corne d'arc (8) est poussée, par poinçonnage, à l'intérieur de l'(des) orifice(s) dit(s) premier(s) (17,18) par l'une (17a,18a) de ses (de leurs) extrémité(s), et plaquée contre la face intérieure dudit(desdits) orifice(s) dit(s) premier(s) sans que la matière ne débouche dudit(desdits) orifice(s) dit(s) premier(s), par son (leurs) extrémité(s) opposée(s) (17b,18b), la fixation du support (4) de contact fixe sur la corne d'arc (8) étant réalisée par accrochage et/ou frottage et/ou arc-boutage de la matière (21) de la corne d'arc (8) sur la face intérieure des orifices dits premiers (17,18) du support de contact (4).

2. Procédé de fixation selon la revendication 1, **caractérisé en ce que** le nombre d'orifices dits premiers est de deux, de même que le nombre d'orifices dits seconds.

3. Procédé de fixation selon la revendication 1 ou 2, **caractérisé en ce que** la corne d'arc (8) est fixée sur la face extérieure (10a) de l'aile (10) du U comportant la pastille de contact (12).

4. Appareil de coupure électrique comportant un contact fixe et un contact mobile, lesdits contacts étant aptes à être fermés lors d'un fonctionnement normal de l'appareil et à être ouverts lors de l'apparition d'un incident sur la ligne électrique sur laquelle est placé l'appareil, ledit contact fixe comportant une pastille de contact (12) montée sur un support fixe (4), sur lequel support fixe est fixée une corne d'arc (8) selon le procédé de fixation selon l'une quelconque des revendications 1 à 3.

5. Appareil de coupure électrique selon la revendication 4, **caractérisé en ce que** c'est un disjoncteur différentiel ou non, ou bien un interrupteur différentiel ou non.

## Patentansprüche

1. Verfahren zur Befestigung eines Lichtbogenhorns (8) am Träger (4) eines ortsfesten Kontakts in einem elektrischen Abschaltgerät, wobei der Träger (4) U-förmig gebogen ist, wobei eine Kontaktpastille (12) an der Außenfläche (10a) eines der Schenkel des erwähnten U befestigt ist,
**dadurch gekennzeichnet, dass** das erwähnte Lichtbogenhorn (8) eine halbkreisförmige Öffnung (14) aufweist, durch die das Lichtbogenhorn (8) um die erwähnte Kontaktpastille (12) herum montiert werden kann, wobei die Kontaktpastille (12) aus einem scheibenförmigen Block besteht, der an der Außenfläche (10a) des Schenkels (10) des U vorsteht, und
dass zwei so genannte erste Öffnungen (17,18) im erwähnten Träger (4) eines ortsfesten Kontakts hergestellt werden, dann eine Vorbohrung im Lichtbogenhorn (8) hergestellt wird, um mindestens eine so genannte zweite Öffnung (19,20) im Lichtbogenhorn herzustellen, wobei die zweite(n) Öffnung(en) (19,20) kleinere Abmessungen hat(haben) als die erste(n) Öffnung(en) (17,18), dann das Lichtbogenhorn (8) so über den Kontaktträger gebracht wird, dass das Lichtbogenhorn um den Block herum montiert wird, indem die so genannte(n) erste(n) Öffnung(en) der(den) so genannten zweiten Öffnung(en) gegenüber angeordnet wird(werden), dann das Material (21) des Lichtbogenhorns (8) durch Lochstanzen ins Innere der so genannten ersten Öffnung(en) (17,18) über eines (17a,18a) ihrer Enden geschoben und gegen die Innenseite der so genannten ersten Öffnung(en) gepresst wird, ohne dass das Material aus der(den) so genannten ersten Öffnung(en) über ihr gegenüberliegende Ende (17b,18b) austritt, wobei die Befestigung des Trägers (4) eines ortsfesten Kontakts am Lichtbogenhorn (8) durch Verankerung und/oder Reibung und/oder Stemmen des Materials (21) des Lichtbogenhorns (8) auf der Innenseite der so genannten ersten Öffnungen (17,18) des Kontaktträgers (4) durchgeführt wird.

2. Befestigungsverfahren nach Anspruch 1, **dadurch gekennzeichnet, dass** die Anzahl von so genannten ersten Öffnungen wie auch die Anzahl von so genannten zweiten Öffnungen zwei ist.

3. Befestigungsverfahren nach Anspruch 1 oder 2, **dadurch gekennzeichnet, dass** das Lichtbogenhorn (8) an der Außenseite (10a) des Schenkels (10) des U befestigt wird, die die Kontaktpastille (12) aufweist.

4. Elektrisches Abschaltgerät, das einen ortsfesten Kontakt und einen beweglichen Kontakt aufweist, wobei die Kontakte bei einem normalen Betrieb des Geräts geschlossen und beim Auftreten eines Zwischenfalls auf der elektrischen Leitung geöffnet werden können, auf der das Gerät angeordnet ist, wobei der ortsfeste Kontakt eine Kontaktpastille (12) aufweist, die auf einen ortsfesten Träger (4) montiert ist, auf welchem ortsfesten Träger ein Lichtbogenhorn (8) nach dem Befestigungsverfahren nach einem der Ansprüche 1 bis 3 befestigt ist.

5. Elektrisches Abschaltgerät nach Anspruch 4, **dadurch gekennzeichnet, dass** es ein Fehlerstrom-Schutzschalter oder nicht, oder auch ein Fehlerstrom-Schalter oder nicht ist.

## Claims

1. Method for fixing an arcing horn (8) on the support (4) of a fixed contact in an electrical switchgear, said support (4) being folded into a U shape, a contact pad (12) being fixed to the outer surface (10a) of one of the wings of the abovementioned U, **characterized in that** the abovementioned arcing horn (8) comprises a semicircular opening (14) through which said arcing horn (8) can be mounted around the abovementioned contact pad (12), said contact pad (12) being composed of a disc-shaped bump contact protruding on said outer surface (10a) of the wing (10) of the U, and
**in that** two so-called first orifices (17, 18) are produced in the abovementioned fixed contact support (4), then the arcing horn (8) is pre-drilled so as to produce at least one so-called second orifice(s) (19, 20) in the arcing horn, said second orifice(s) (19, 20) being of smaller dimensions than said first orifice(s) (17, 18),
then the arcing horn (8) is brought above the contact support so that the arcing horn is mounted around the bump contact, by arranging the so-called first orifice(s) facing the so-called second orifice(s), then the material (21) of the arcing horn (8) is pushed, by stamping, into the so-called first orifice(s) (17, 18) through one of its (their) end(s) (17a, 18a), and pressed against the internal face of said so-called first orifice(s) without the material emerging from said so-called first orifice(s), through its (their) opposite end(s) (17b, 18b), the fixing of the fixed contact support (4) to the arcing horn (8) being produced by attachment and/or rubbing and/or bracing of the material (21) of the arcing horn (8) on the internal face of the so-called first orifices (17, 18) of the contact support (4).

2. Fixing method according to Claim 1, **characterized in that** the number of so-called first orifices is two, like the number of so-called second orifices.

3. Fixing method according to Claim 1 or 2, **characterized in that** the arcing horn (8) is fixed to the outer face (10a) of the wing (10) of the U comprising the contact pad (12).

4. Electrical switchgear comprising a fixed contact and a mobile contact, said contacts being able to be closed during normal operation of the device and to be opened upon the occurrence of an incident on the electrical line on which the device is placed, said fixed contact comprising a contact pad (12) mounted on a fixed support (4), on which fixed support an arcing horn (8) is fixed according to the fixing method according to any one of Claims 1 to 3.

5. Electrical switchgear according to Claim 4, **characterized in that** it is a differential or non-differential circuit breaker, or else a differential or non-differential switch.
